# EUROPEAN PATENT SPECIFICATION

(11) **EP 4 108 341 B1**
(45) Date of publication and mention of the grant of the patent: **25.02.2026**
(21) Application number: 21181024.7
(22) Date of filing: 23.06.2021
(51) Int. Cl.: B04B 11/02, B04B 7/00, B04B 15/02, B04B 1/08, F16J 15/34

(54) **CENTRIFUGAL SEPARATOR**
ZENTRIFUGALABSCHEIDER
SÉPARATEUR CENTRIFUGE

(43) Date of publication of application: 28.12.2022
(73) Proprietor: Alfa Laval Corporate AB, 221 00 Lund (SE)
(72) Inventor: HÖGLUND, Kasper, SE-144 63 RÖNNINGE (SE)
(74) Representative: Alfa Laval Attorneys

(56) References cited:
- EP-A1- 3 384 993
- WO-A1-2018/117031
- US-A- 4 670 002
- US-A- 4 810 240

## Description

### TECHNICAL FIELD

The invention relates to a centrifugal separator.

### BACKGROUND

A centrifugal separator comprises a bowl and a driven spindle configured to rotate the bowl about a rotational axis. Inside the bowl there is a separation space wherein e.g. a stack of frustoconical separation discs is arranged. A fluid feed mixture is fed into the separation space and the disc stack and is separated into at least a light fluid phase and a heavy fluid phase during rotation of the bowl. The light and heavy fluid phases may be continuously led out of the bowl.

A mechanical hermetical seal may be arranged between a stationary portion of the centrifugal separator and the bowl for sealing a fluid path extending therebetween. A mechanical hermetical seal comprises two halves, one in the stationary portion and one in the bowl, which halves abut against each other. One or more of fluid paths for the fluid feed mixture, the separated light fluid phase, and the separated heavy fluid phase may be mechanically hermetically sealed. Such a seal arrangement is known for example from US 4810240.

US 2536793 discloses mechanical hermetical sealing devices for centrifugal separators. The sealing device is arranged between fixed piping of the centrifugal separator to a bowl of a centrifugal separator and is devised to provide a seal under conditions when a position of the bowl deviates radially. In the embodiments according to Fig. 11 two liquid components are conveyed from the bowl into the fixed piping concentrically with a rotational axis of the bowl. The sealing between the fixed piping and the bowl is provided by two discs, one arranged in the bowl, the other connected to the fixed piping. Each of the discs is provided with channels for the two liquids. Two expansion bellows are soldered to discharge pipes of the fixed piping and the relevant disc. The two bellows are arranged in fluid communication with the channels in the disc and the discharge pipes. Moreover, the two bellows permit the disc connected to the fixed piping to follow the movements of the rotating bowl during use of the centrifugal separator. However, maintenance of the sealing device is complicated. For instance, the exchange of the sealing disc of the fixed piping is a complicated operation.

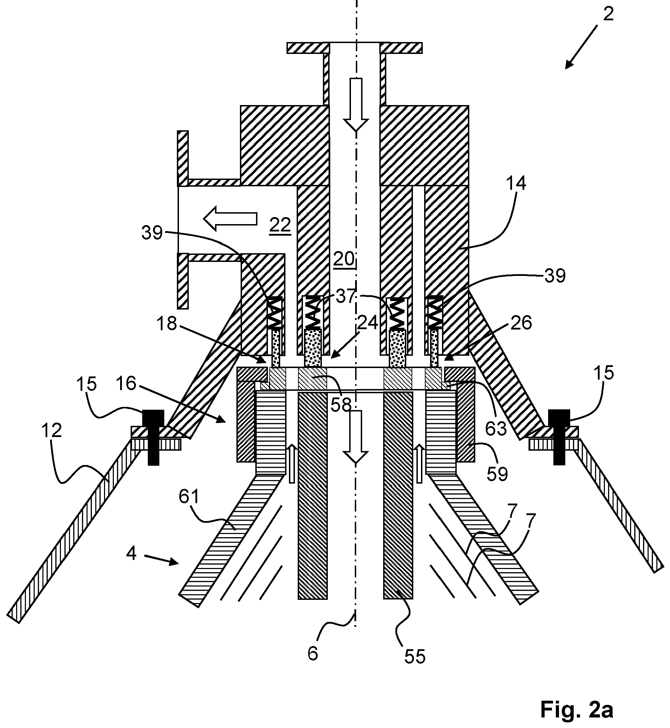

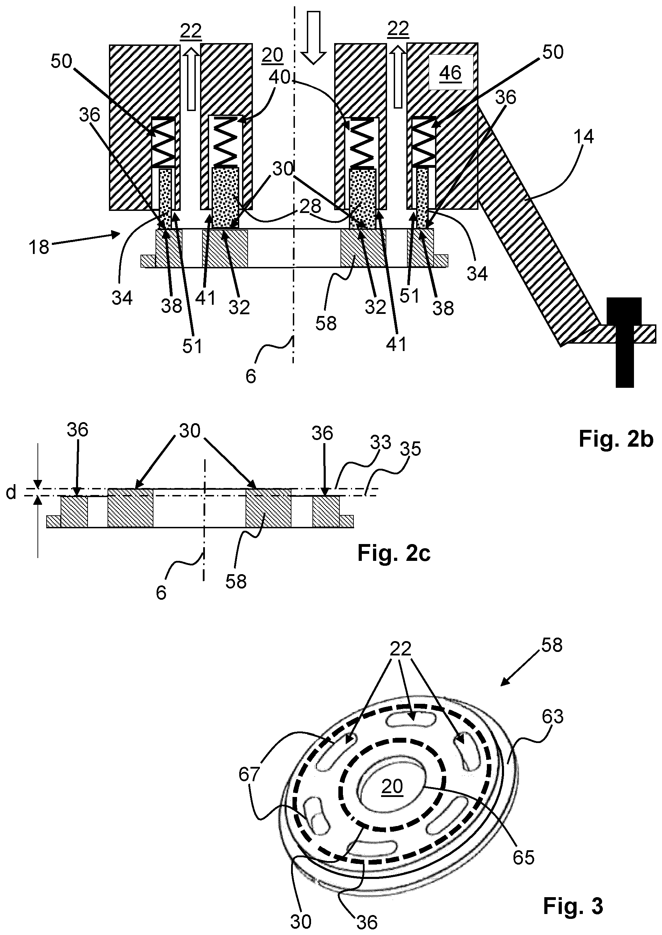

EP 3384993 discloses a seal assembly for providing a seal between a first zone and a second zone in a centrifugal separator. The seal assembly comprises a rotatable sealing member comprising a first sealing ring, a stationary sealing member comprising a second sealing ring and means for bringing the first and second sealing rings into engagement with each other. In the embodiments of Figs. 2 and 3, two concentric seal assemblies are provided. The seal assemblies are arranged axially separated from each other, a first assembly at an axially uppermost portion of a top disc of the rotor of the centrifugal separator and a second assembly at the rotor, below the first seal assembly. Also this seal assembly is complicated to perform maintenance on. The two seal assemblies are difficult to access.

### SUMMARY

It would be advantageous to provide a centrifugal separator comprising a sealing arrangement overcoming, or at least alleviating, at least some of the above-mentioned drawbacks. In particular, it would be desirable to enable easy maintenance of a sealing arrangement for two liquid paths of a centrifugal separator. To better address one or more of these concerns, a centrifugal separator having the features defined in the independent claim is provided.

According to an aspect of the invention, there is provided a centrifugal separator comprising a bowl arranged to be rotated about a rotational axis extending along an axial extension, a spindle arranged at a first axial end portion of the bowl and arranged to rotate the bowl about the rotational axis, a housing at least partially enclosing the bowl, a stationary liquid passage device arranged at a second axial end portion of the bowl, and a sealing arrangement, wherein the sealing arrangement forms an interface between the bowl and the stationary liquid passage device. A first liquid path extends concentrically with the rotational axis between the stationary liquid passage device and the bowl, and a second liquid path extends radially outside the first liquid path between the stationary liquid passage device and the bowl. The stationary liquid passage device is releasably connected to the housing. The sealing arrangement comprises a first seal between the first liquid path and the second liquid path, the first seal extending concentrically with and around the rotational axis. The sealing arrangement comprises a second seal between the second liquid path and a space radially outside the second liquid path, the second seal extending concentrically with and around the rotational axis. The first seal comprises a first seal member arranged in the stationary liquid passage device and a first sealing surface arranged in the bowl, the first seal member having a first axial end face, the first axial end face and the first sealing surface being configured to be positioned in sealing abutment. The second seal comprises a second seal member arranged in the stationary liquid passage device and a second sealing surface arranged in the bowl, the second seal member having a second axial end face, the second axial end face and the second sealing surface being configured to be positioned in sealing abutment. The second seal member is separate from the first seal member, and the first and second seal members, are separable from the first and second sealing surfaces together with a release of the stationary liquid passage device from the housing.

Since the second seal member is separate from the first seal member and since the first and second seal members are separable from the first and second sealing surfaces together with a release of the stationary liquid passage device from the housing, two individual self-adjusting seals are provided for the first and second liquid paths, which two seals are easily accessible e.g., for maintenance purposes.

The centrifugal separator may be configured for separating a fluid feed mixture, such as a liquid feed mixture, into a light phase and a heavy phase. The separation is performed in a separation space defined with in the bowl. A separation aid e.g., a stack of frustoconical separation discs or radially and axially extending sheets, may be arranged in the separation space.

The fluid feed mixture is led into the separation space along the rotational axis. The separated light phase is led out of the separation space along the rotational axis or radially close to the rotational axis. The separated heavy phase may be ejected from a radially outer periphery of the bowl. Alternatively, also the separated heavy phase may be led out of the separation space along the rotational axis or radially close to the rotational axis. According to some embodiments, a sludge phase may be separated from the fluid feed mixture and may be ejected from a radially outer periphery of the bowl.

The stationary liquid passage device may form an interface for conduits connected to the centrifugal separator. That is, two or more of the liquid feed mixture, the light phase, and the heavy phase may be fed to/from the centrifugal separator via the stationary liquid passage device. Accordingly, the stationary liquid passage device may comprise further portions of the first and second liquid paths.

Each of the first and second liquid paths may be devised for conducting therethrough one of the fluid feed mixture, the light phase, and the heavy phase. The third of the fluid feed mixture, the light phase, and the heavy phase may be conducted into or out of the bowl via a third liquid path. The third liquid path may be provided at the first axial end portion of the bowl e.g., via the spindle, or it may be provided radially outside the second liquid path at the second axial end portion of the bowl.

Each of the first and second seals forms a mechanical hermetical seal. A mechanical hermetical seal may alternatively be referred to as mechanical end-face seal.

According to embodiments, the first sealing surface may be arranged in a first plane and the second sealing surface may be arranged in a second plane, the first and second planes extending perpendicularly to the rotational axis. The first and second planes may be arranged at an axial distance from each other within a range of 0 - 25 mm. In this manner, the separability of the first and second seal members from the first and second sealing surfaces may be provided in a convenient manner. As an example, the first and second sealing surfaces may be arranged in one plane extending perpendicularly to the rotational axis.

According to embodiments, the first seal member may be biased towards the first sealing surface by one or more first resilient members and the second seal member may be biased towards the second sealing surface by one or more second resilient members. The one or more first and second resilient members may be arranged external of the first and second liquid paths. In this manner, dedicated first and second resilient members may ensure that the first and second seal members are in sealing abutment with the respective first and second sealing surfaces, as small misalignments between the bowl and the stationary portion occur during operation of the centrifugal separator and as the seal members wear. The function of the first and second resilient members may be optimised for their biasing function. Any double function of the biasing members is not required, such as also forming flow path limiting members. Compare with prior art represented by US 2536793.

According to embodiments, the first seal member may be partially arranged in a first axial slot of the stationary liquid passage device. The first axial slot, seen in relation to the rotational axis, may extend circumferentially and may have a depth from a first slot opening along the axial extension. The first axial end face of the first seal member may be arranged outside the first slot opening. In this manner, the first seal member may be arranged in the stationary liquid passage device with the first axial end face in abutment with the first sealing surface arranged in the bowl.

According to embodiments, the second seal member may be partially arranged in a second axial slot of the stationary liquid passage device. The second axial slot, seen in relation to the rotational axis, may extend circumferentially and may have a depth from a second slot opening along the axial extension. The second axial end face of the second seal member may be arranged outside the second slot opening. In this manner, the second seal member may be arranged in the stationary liquid passage device with the second end face in abutment with the second sealing surface arranged in the bowl.

According to embodiments, the first and second sealing surfaces may be provided in a single sealing element. In this manner, the first and second sealing surfaces may be provided in a convenient manner in the bowl of the centrifugal separator.

The single sealing element is a single part which for instance, may be replaceable and accordingly, releasably secured to the bowl.

According to embodiments, the sealing element may form at least part of an axial end of the bowl at the second axial end portion of the bowl. In this manner, the first and second sealing surfaces may be positioned at the bowl for the first and second axial end faces of the first and second sealing members to readily abut thereagainst.

According to embodiments, the centrifugal separator may comprise a first cooling system, wherein the first cooling system may comprise a first passage extending within the first seal member and being arranged for conducting cooling liquid to the first axial end face. In this manner, cooling of the first seal may be provided.

According to embodiments, the centrifugal separator may comprise a second cooling system. The second cooling system may comprise an axial passage extending within the second seal member and being arranged to conduct cooling liquid to the second sealing surface, radially outside the second axial end face. In this manner, cooling of the second seal may be provided.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Fig. 1 schematically illustrates a centrifugal separator according to embodiments in a cross-sectional view,
Figs. 2a and 2b schematically illustrate cross sections through a portion of a centrifugal separator,
Fig. 2c schematically illustrates a cross section through a sealing element of a centrifugal separator,
Fig. 3 illustrates a perspective view of a single sealing element of a centrifugal separator, and
Figs. 4a and 4b schematically illustrate embodiments of a sealing arrangement of a centrifugal separator.

### DETAILED DESCRIPTION

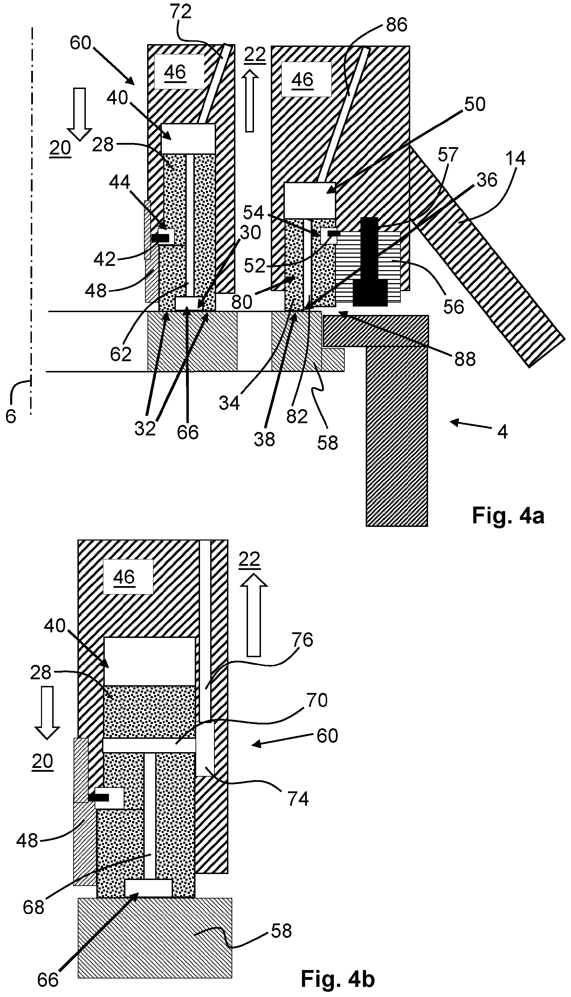

Aspects and/or embodiments of the invention will now be described more fully. Like numbers refer to like elements throughout. Well-known functions or constructions will not necessarily be described in detail for brevity and/or clarity. In each of **Figs. 2a****,** **2b****,** **4a, and 4b** each hatching relates to a separate feature.

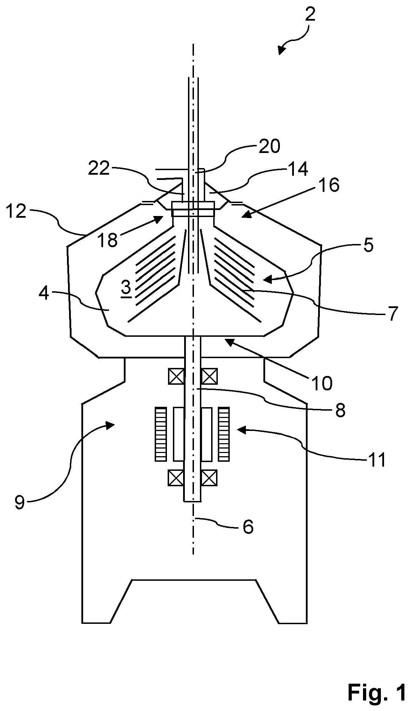

**Fig. 1** schematically illustrates a centrifugal separator 2 according to embodiments in a cross-sectional view. The centrifugal separator 2 is configured for separating a fluid feed mixture into a light phase and a heavy phase.

The centrifugal separator 2 comprises a bowl 4. The bowl 4 is arranged to rotate about a rotational axis 6 extending along an axial extension. Herein, the axial extension serves to define positions of portions, parts, etc. of the centrifugal separator 2.

The bowl 4 is provided with a separation space 3. A stack 5 of frustoconical separation discs 7 is arranged inside the separation space 3.

The centrifugal separator 2 further comprises a spindle 8 arranged at a first axial end portion 10 of the bowl 4 and arranged to rotate the bowl 4 about the rotational axis 6.

The spindle 8 forms part of a drive arrangement 9 of the centrifugal separator 2. In the illustrated embodiments, the drive arrangement 9 further comprises an electric motor 11. The bowl 4 is attached to the spindle 8. The spindle 8 forms part of the electric motor 11, i.e. the bowl 4 is directly driven by the electric motor 11. Thus, the drive arrangement 9 may rotate the bowl 4 about the rotational axis 6.

Alternatively, the drive arrangement 9 may comprise a spindle 8 connected to the bowl 4, an electric motor, and a transmission arranged between the electric motor and the spindle 8.

The centrifugal separator 2 further comprises a housing 12, which at least partially encloses the bowl 4 and a stationary liquid passage device 14 arranged at a second axial end portion 16 of the bowl 4. The stationary liquid passage device 14 is releasably connected to the housing 12. Moreover, the centrifugal separator 2 comprises a sealing arrangement 18, which forms an interface between the rotatable bowl 4 and the stationary liquid passage device 14.

A first liquid path 20 extends concentrically with the rotational axis 6 between the stationary liquid passage device 14 and the bowl 4. A second liquid path 22 extends radially outside the first liquid path 20 between the stationary liquid passage device 14 and the bowl 4.

Each of the first and second liquid paths 20, 22 is arranged for conducting one of the fluid feed mixture, the light phase, and the heavy phase to or from the separation space 3. That is, the first and second liquid paths 20, 22 are arranged in fluid communication with the separation space 3. Herein, the fluid feed mixture, the light phase, and the heavy phase may be referred to as process fluids.

In the illustrated embodiments the fluid feed mixture is conducted through the first liquid path 20 and the light phase is conducted through the second liquid path 22 during use of the centrifugal separator 2.

The third of the process fluids, i.e. the heavy phase in the illustrated embodiments, may be conducted via a third liquid path (not shown).

During separation of the fluid feed mixture in the separation space 3 of the bowl 4, the fluid feed mixture is lead via the first fluid path 10 from the centre of the bowl 4 into the separation space 3 and the disc stack 5. The fluid feed mixture is separated into the light phase and the heavy phase. The separated light phase flows radially inwardly between the separation discs 7 towards the rotational axis 6 and out of the bowl 4 via the second fluid path 22. The separated heavy phase flows radially outwardly between the separation discs 7 towards a periphery of the separation space 3 and out of the bowl 4 via the non-shown third fluid path.

Centrifugal separators of this kind are known and come in a number of different types and sizes. The present invention is generally applicable to different types and sizes of centrifugal separators of this kind. Except for embodiments of the sealing arrangement 18 discussed herein without limitation to any specific process fluids, the present invention is not limited to the type and arrangement of the fluid paths communicating with the separation space 3. For instance, further fluid paths may be open, intermittently openable, mechanically hermetically sealed, or provided with a parring disc. They may be provided at the second end portion 16 of the bowl 4 radially outside the second fluid path 22, at the first end portion 10 of the bowl 4 e.g. via the spindle 8, and/or at an outer periphery of the bowl 4.

**Fig. 2a** schematically illustrates a cross section through the stationary liquid passage device 14, the second axial end portion 16 of the bowl 4, and a portion of the housing 12 of the centrifugal separator 2 of **Fig. 1****.** **Fig. 2b** schematically illustrates a partial enlarge view of **Fig. 2a****.** In the following reference is made to both **Figs. 2a** **and** **2b****.**

The stationary liquid passage device 14 is releasably connected to the housing 12. In the illustrated embodiments, the stationary liquid passage device 14 is connected to the housing 12 with screws 15. Alternative, connections may comprise, claps, wing-nuts, etc.

In the illustrated embodiments, the first liquid path 20 forms part of an inlet for the fluid feed mixture and the second liquid path 22 forms part of an outlet for the separated light phase. As discussed above, according to alternative embodiments, other of the process fluids may flow through the first and second liquid paths 20, 22.

The sealing arrangement 18 comprises a first seal 24 arranged between the first liquid path 20 and the second liquid path 22. The first seal 24 extends concentrically with and around the rotational axis 6. The sealing arrangement 18 further comprises a second seal 26 arranged between the second liquid path 22 and a space radially outside the second liquid path 22. The second seal 26 extends concentrically with and around the rotational axis 6. The second seal 26 also extends around the first seal 24.

The first seal 24 comprises a first seal member 28 arranged in the stationary liquid passage device 14 and a first sealing surface 30 arranged in the bowl 4. The first seal member 28 has a first axial end face 32 which is arranged in sealing abutment with the first sealing surface 30.

The second seal 26 comprises a second seal member 34 arranged in the stationary liquid passage device 14 and a second sealing surface 36 arranged in the bowl 4. The second seal member 34 has a second axial end face 38. The second axial end face 38 and the second sealing surface 36 are arranged in sealing abutment with each other.

The second seal member 34 is separate from the first seal member 28. In this manner, two individual seals are provided which means that each of them is adjustable independent of the other seal and also, that each of them is individually exchangeable.

Moreover, the first and second seal members 28, 34 are separable from the first and second sealing surfaces 30, 36 together with a release of the stationary liquid passage device 14 from the housing 12. In this manner, the first and second seal members 28, 34 are easily accessible e.g., for maintenance purposes, by dismounting of the stationary liquid passage device 14 from the housing 12.

The first seal member 28 is biased towards the first sealing surface 30 by one or more first resilient members 37. The second seal member 34 is biased towards the second sealing surface 36 by one or more second resilient members 39. In the illustrated embodiments, the first and second resilient members 37, 39 comprise a number of helical springs. The resilient members may alternatively comprise stacks of conical spring washers or pads of an elastic rubber material or other suitable members or combinations of members.

The first and second resilient members 37, 39 ensure that the first and second seal members 28, 34 are biased independently of each other. Accordingly, it is ensured that the first axial end face 32 is in sealing abutment with the first sealing surface 30 and that the second axial end face 38 is in sealing abutment with the second sealing surface 36, independently of each other.

The one or more first and second resilient members 37, 39 are arranged external of the first and second liquid paths 20, 22. That is, the first and second resilient members 37, 39 do not form any part of the first and second liquid paths 20, 22 and are dedicated to their biasing functions.

In the illustrated embodiments, the first and second sealing surfaces 30, 36 are arranged in one plane extending perpendicularly to the rotational axis 6. In this manner, the separability of the first and second seal members 28, 34 from the first and second sealing surfaces 30, 36 may be provided in a convenient manner.

According to alternative embodiments shown in **Fig. 2c,** the first and second sealing surface 30, 36 may be arranged one each in a different plane 33, 35. For instance, the first sealing surface 30 may be arranged in a first plane 33 and the second sealing surface 36 may be arranged in a second plane 35, the first and second planes 33, 35 extending perpendicularly to the rotational axis 6. The first and second planes 33, 35 may be arranged at an axial distance d from each other within a range of 0 - 25 mm. Also in this manner, the separability of the first and second seal members from the first and second sealing surfaces may be provided in a convenient manner.

The first and second sealing surfaces 30, 36 are provided in a single sealing element 58, see also **Fig. 3****.** In this manner, the first and second sealing surfaces 30, 36 are conveniently provided in one single element that is mounted in the bowl 4.

With reference to **Figs. 2a - 3****,** the single sealing element 58 forms at least part of an axial end of the bowl 4 at the second axial end portion 16 of the bowl 4. Thus, the first and second sealing surfaces 30, 36 are arranged at the axial end of the bowl 4 for the first and second axial end faces 32, 38 to abut thereagainst.

The single sealing element 58 is a single part which may be replaceable and accordingly, is releasably secured to the bowl 4. In the illustrated embodiments, the sealing element 58 is secured to the bowl 4 by a ring element 59. The ring element 59 is threadedly connect to a body 61 of the bowl 4. A flange 63 of the sealing element 58 is fixed between the body 61 of the bowl 4 and the ring element 59. According to alternative embodiments, the sealing element 58 may be releasably secured to the bowl 4 in a different manner e.g., utilising screws.

The single sealing element 58 forming at least part of an axial end of the bowl 4 at the second axial end portion 16 of the bowl 4 provides for a compact sealing arrangement 18. The sealing element 58 may be arranged close to a distributor 55 within the bowl 4. For instance, the first and second sealing surfaces 30, 36 may be arranged within a range of 0 - 50 mm from an axial end of the distributor 55. The distributor 55 is arranged concentrically with the rotational axis 6 and supports the stack of separation discs. Thus, separation members e.g., in the form of the illustrated separation discs 7 are arranged one the distributor 55.

In **Figs. 2a** **and** **2b****,** sealing O-rings arranged between the single sealing element 58 and other parts of the bowl 4 as well as between the respective first and second seal members 28, 34 and other parts of the stationary liquid passage device 14, have been omitted for the sake of clarity.

**Fig. 3** illustrates a perspective view of the single sealing element 58 of the centrifugal separator 2 discussed above with reference to **Figs. 2a** **and** **2b****.**

The first and second sealing surfaces 30, 36 are indicated with broken lines.

The first liquid path 20 extends through the sealing element 58 and the second liquid path 22 extends through the sealing element 58. In this manner, the sealing element 58, that provides the first and second sealing surfaces 30, 36, can be provided in one single element.

More specifically, the first liquid path 20 extends through a central opening 65 of the sealing element 58 and the second liquid path 22 extends through a number of passages 67 provided circumferentially around the central opening 65. The first sealing surface 30 is arranged between the central opening 65 and the second sealing surface 36 is arranged radially outside the passages 67.

The sealing element 58 comprises a flange 63 configured to be fixed between the body 61 of the bowl 4 and the ring element 59, see also **Fig. 2a****.**

Returning to **Figs. 2a** **and** **2b****,** the first seal member 28 is partially arranged in a first axial slot 40 of the stationary liquid passage device 14. The first axial slot 40 extends circumferentially around the rotational axis 6. The first axial slot 40 has a depth extending from a first slot opening 41 along the axial extension. The first axial end face 32 of the first seal member 28 is arranged outside the first slot opening 41. Thus, the first seal member 28 is arranged in the stationary liquid passage device 14 in a manner for it to be arranged in sealing abutment with the first sealing surface 30 in the bowl 4.

The one or more first resilient members 37 are arranged in the first axial slot 40 abutting directly or indirectly against a body 46 of the stationary passage device 14 and the first seal member 28 to bias the first seal member 28 in the direction outwardly of the first axial slot 40.

Alternatively, the one or more first resilient members 37 may be arranged in separate recesses, beyond the first axial slot 40, seen in a direction along the axial extension.

The second seal member 34 is partially arranged in a second axial slot 50 of the stationary liquid passage device 14. The second axial slot 50 extends circumferentially around the rotational axis 6 and the first axial slot 40. The second axial slot 50 has a depth from a second slot opening 51 along the axial extension. The second axial end face 38 of the second seal member 34 is arranged outside the second slot opening 51. Thus, the second seal member 34 is arranged in the stationary liquid passage device 14 in a manner for it to be arranged in sealing abutment with the second sealing surface 36 in the bowl 4.

The one or more second resilient members 39 are arranged in the second axial slot 50 abutting directly or indirectly against the body 46 of the stationary passage device 14 and the second seal member 34 to bias the second seal member 34 in the direction outwardly of the second axial slot 50.

Alternatively, the one or more second resilient members 39 may be arranged in separate recesses, beyond the second axial slot 50, seen in a direction along the axial extension.

Mentioned as examples, the first and second seal members 28, 34 may be made from carbon-graphite. The sealing element 58, or at least the first and second sealing surfaces 30, 36, may be made from silicon carbide or tungsten carbide. In this manner, good sealing and wear properties may be provided by the first and second seals 24, 26. According to a further example, which may be suitable when at least one of the process fluids contains abrasive matter, at least the first and second axial end faces 32, 38 of the first and second seal members 28, 34 as well as at least the first and second sealing surfaces 30, 36 of the sealing element 58, may be made from a hard material, such as silicon carbide or tungsten carbide.

**Figs. 4a and 4b** schematically illustrate embodiments of the sealing arrangement 18 of the centrifugal separator 2 discussed above with reference to **Figs. 1** - **3****.** In the following reference is also made to **Figs. 1** - **3****.**

More specifically, **Figs. 4a and 4b** illustrate cross sections of example embodiments configured for retaining the first and second seal members 28, 34 in the respective first and second slots 40, 50 as well as example embodiments of cooling solutions for cooling the abutting surfaces and end faces of the first and second seals 24, 26.

For the sake of clarity, the first and second resilient members have been omitted in **Figs. 4a and 4b****.** Also, sealing O-rings arranged between the respective first and second seal members 28, 34 and other parts of the stationary liquid passage device 14 have been omitted for the sake of clarity.

The first seal member 28 is retained within the first axial slot 40 by a first ring member 42. The first ring member 42 is secured in the stationary liquid passage device 14 and extends into a radial slot 44 of the first seal member 28. In this manner, the first ring member 42 prevents the first seal member 28 from being biased out of the first slot 40 e.g., during mounting of the stationary liquid passage device 14 to the housing 12 of the centrifugal separator 2 and during releasing the stationary liquid passage device 14 from the housing 12.

More specifically, the first ring member 42 extending into the radial slot 44 of the first seal member 28 retains the first seal member 28 in the first axial slot 40 since the first ring member 42 in turn is secured in the stationary liquid passage device 14.

The arrangement of the first ring member 42 securing the first seal member 28 in the first slot 40 by extending into the radial slot 44 of the first seal member 28 provides a radially narrow solution for retaining the first seal member 28 in the stationary liquid passage device 14.

The first ring member 42 is secured in the stationary liquid passage device 14 between a body 46 of the stationary liquid passage device 14 and a sleeve 48. The sleeve 48 is removably connected to the body 46. In this manner, a fixed axial position of the first ring member 42 is provided for retaining the first seal member 28 in the first axial slot 40.

The sleeve 48 may be threadedly connected to the body 46 of the stationary liquid passage device 14. The sleeve 48 may be provided with external threads and the body 46 may be provided with interna threads (threads not shown).

The first ring member 42 may be an external circlip (snap ring) configured to snap onto the sleeve 48.

The body 46 of the stationary liquid passage device 14 and the sleeve 48 may delimit a portion of the first liquid path 20. In this manner, a radially narrow retention of the first seal member 28 in the stationary liquid passage device 14 may be achieved. Moreover, since the retention of the first seal member 28 in the stationary liquid passage device 14 may be achieved from a radially inner side of the first seal member 28, a distance between the first and second slots 40, 50 may be comparatively small since no seal member retaining elements have to be arranged between the first and second slots 40, 50.

The second seal member 34 is retained within the second axial slot 50 by a second ring member 52. The second ring member 52 is secured in the stationary liquid passage device 14 and extends into a radial slot 54 of the second seal member 34. In this manner, the second ring member 52 prevents the second seal member 34 from being biased out of the second slot 50 e.g., during mounting of the stationary liquid passage device 14 to the housing 12 of the centrifugal separator 2 and during releasing the stationary liquid passage device 14 from the housing 12.

More specifically, the second ring member 52 extending into the radial slot 54 of the second seal member 34 retains the second seal member 34 in the second axial slot 50 since the second ring member 52 in turn is secured in the stationary liquid passage device 14.

The arrangement of the second ring member 52 securing the second seal member 34 in the second slot 50 by extending into the radial slot 54 of the second seal member 34 provides a radially narrow solution for retaining the second seal member 34 in the stationary liquid passage device 14.

The second ring member 52 is secured in the stationary liquid passage device 14 between the body 46 of the stationary liquid passage device 14 and a retaining ring 56. The retaining ring 56 is removably connected to the body 46. In this manner, a fixed axial position of the second ring member 52 is provided for retaining the second seal member 34 in the second axial slot 50.

The retaining ring 56 may be connected to the body 46 of the stationary liquid passage device 14 with screws 57.

The second ring member 52 may be an internal circlip (snap ring) configured to snap into the retaining ring 56.

During operation of the centrifugal separator 2, the first and second sealing surfaces 30, 36 arranged in the bowl 4 and the thereagainst abutting first and second end faces 32, 38 of the first and second seal members 28, 34 may require cooling. In the following example cooling systems 60, 80 are discussed.

The first seal member 28, its first axial end face 32, and the first sealing surface 30 are cooled by a first cooling system 60. During operation of the centrifugal separator 2, a cooling liquid is supplied to the first cooling system 60. In order to show passages of the first cooling system 60, **Figs. 4a and 4b** show cross sections at different circumferential positions of the stationary liquid passage device 14.

The first cooling system 60 comprises a first passage 62 extending within the first seal member 28 and being arranged for conducting cooling liquid to the first axial end face 32. Since the cooling liquid is supplied to the first axial end face 32, it is also supplied to the first sealing surface 30. Thus, both the first axial end face 32 and the first sealing surface 30 can be cooled.

The first cooling system 60 comprises a recess 66 in the first axial end face 32 extending at least partially circumferentially, and a second passage 68 extending within the first seal member 28. The first passage 62 (**Fig. 4a**), the recess 66, and the second passage 68 (**Fig. 4b**) are arranged in fluid communication with each other. In this manner, the colling fluid can be conducted to, along, and from the first axial end face 32.

Since the recess 66 extends at least partially circumferentially in the first axial end face 32, the first axial end face 32 may be at least partially circumferentially divided.

The second passage 68 may extend to an axial mid portion of the first seal member 28 and via a radial passage 70 to outside the first seal member 28.

The first cooling system 60 comprises a first cooling liquid channel 72 extending in the stationary liquid passage device 14 to the first passage 62, a recess 74 extending circumferentially around the first seal member 28 in the stationary liquid passage device 14 connecting to the radial passage 70, and a second cooling liquid channel 76 in the stationary liquid passage device 14 extending from the recess 74. In this manner, cooling liquid can be supplied to and from the passages 62, 68, 70 and recess 66 in the first seal member 28.

The first slot 40 may also form part of the first cooling system 60 in the sense that part of it may be included in the first cooling liquid channel 72.

The second seal member 34, its second axial end face 38, and the second sealing surface 36 are cooled by a second cooling system 80. During operation of the centrifugal separator 2, a cooling liquid is supplied to the second cooling system 80.

The second cooling system 80 comprises an axial passage 82 extending within the second seal member 34 and being arranged to conduct cooling liquid to the second sealing surface 36, radially outside the second axial end face 38.

Since cooling liquid can be conducted to the second sealing surface 36 also the second axial end face 38 abutting against the second sealing surface 36 can also be cooled.

The stationary liquid passage device 14 comprises a third cooling liquid channel 86 extending to the axial passage 82. A fourth cooling liquid channel 88 extends from the second sealing surface 36. In this manner, the colling fluid can be conducted to and from the second sealing surface 36.

The second slot 50 may also form part of the second cooling system 80 in the sense that part of it may be included in the third cooling liquid channel 86.

In the illustrated embodiments, the fourth cooling liquid channel 88 extends between the stationary liquid passage device 14 and the bowl 4.

The first cooling system 60 may be utilised for detecting a leakage in the first seal 24. If the first seal 24 fails and process fluid in the first and/or second fluid path 20, 22 leaks through the first seal 24, the process fluid may be detected in the cooling liquid that has passed the first cooling system 60. A process fluid detecting sensor may be arranged for instance downstream of the second cooling liquid channel 76. Similarly, a leak of process fluid through the second seal 26 may be detected in the cooling liquid that has passed the second cooling system 80.

Sealing O-rings (not shown) may be arranged between the first member 28 and the body 46 of the stationary liquid passage device 14 in the first slot 40 to seal the first slot 40 from the process fluids and the cooling liquid. Similarly, sealing O-rings (not shown) may be arranged between the second seal member 34 and the body 46 of the stationary liquid passage device 14 in the second slot 50 to seal the second slot 50 from a process fluid and the cooling liquid.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A centrifugal separator (2) comprising a bowl (4) arranged to be rotated about a rotational axis (6) extending along an axial extension, a spindle (8) arranged at a first axial end portion (10) of the bowl (4) and arranged to rotate the bowl (4) about the rotational axis (6), a housing (12) at least partially enclosing the bowl (4), a stationary liquid passage device (14) arranged at a second axial end portion (16) of the bowl (4), and a sealing arrangement (18), wherein
the sealing arrangement (18) forms an interface between the bowl (4) and the stationary liquid passage device (14), wherein
a first liquid path (20) extends concentrically with the rotational axis (6) between the stationary liquid passage device (14) and the bowl (4) and a second liquid path (22) extends radially outside the first liquid path (20) between the stationary liquid passage device (14) and the bowl (4), wherein
the sealing arrangement (18) comprises a first seal (24) between the first liquid path (20) and the second liquid path (22), the first seal (24) extending concentrically with and around the rotational axis (6), wherein
the sealing arrangement (18) comprises a second seal (26) between the second liquid path (22) and a space radially outside the second liquid path (22), the second seal (26) extending concentrically with and around the rotational axis (6), **characterised in that**,
the stationary liquid passage device (14) is releasably connected to the housing (12),
the first seal (24) comprises a first seal member (28) arranged in the stationary liquid passage device (14) and a first sealing surface (30) arranged in the bowl (4), the first seal member (28) having a first axial end face (32), the first axial end face (32) and the first sealing surface (30) being configured to be positioned in sealing abutment, wherein
the second seal (26) comprises a second seal member (34) arranged in the stationary liquid passage device (14) and a second sealing surface (36) arranged in the bowl (4), the second seal member (34) having a second axial end face (38), the second axial end face and the second sealing surface (36) being configured to be positioned in sealing abutment, wherein
the second seal member (34) is separate from the first seal member (28), and wherein
the first and second seal members (28, 34) are separable from the first and second sealing surfaces (30, 36) together with a release of the stationary liquid passage device (14) from the housing (12).

2. The centrifugal separator (2) according to claim 1, wherein the first sealing surface (30) is arranged in a first plane (33) and the second sealing surface (36) is arranged in a second plane (35), the first and second planes (33, 35) extending perpendicularly to the rotational axis (6), and wherein the first and second planes (33, 35) are arranged at an axial distance from each other within a range of 0 - 25 mm.

3. The centrifugal separator (2) according to claim 1 or 2, wherein the first seal member (28) is biased towards the first sealing surface (30) by one or more first resilient members (37) and the second seal member (34) is biased towards the second sealing surface (36) by one or more second resilient members (39), and wherein the one or more first and second resilient members (37, 39) are arranged external of the first and second liquid paths (20, 22).

4. The centrifugal separator (2) according to claim 3, wherein the first seal member (28) is partially arranged in a first axial slot (40) of the stationary liquid passage device (14),
the first axial slot (40), seen in relation to the rotational axis (6), extending circumferentially and having a depth from a first slot opening (41) along the axial extension, wherein
the first axial end face (32) of the first seal member (28) is arranged outside the first slot opening (41).

5. The centrifugal separator (2) according to claim 4, wherein
the first seal member (28) is retained within the first axial slot (40) by a first ring member (42), the first ring member (42) being secured in the stationary liquid passage device (14) and extending into a radial slot (44) of the first seal member (28).

6. The centrifugal separator (2) according to claim 5, wherein the first ring member (42) is secured in the stationary liquid passage device (14) between a body (46) of the stationary liquid passage device (14) and a sleeve (48), and wherein the sleeve (48) is removably connected to the body (46) of the stationary liquid passage device.

7. The centrifugal separator (2) according to claim 6, wherein the body (46) of the stationary liquid passage device (14) and the sleeve (48) delimit a portion of the first liquid path (20).

8. The centrifugal separator (2) according to any one of claims 3 - 7, wherein the second seal member (34) is partially arranged in a second axial slot (50) of the stationary liquid passage device (14),
the second axial slot (50), seen in relation to the rotational axis (6), extending circumferentially and having a depth from a second slot opening (51) along the axial extension, wherein
the second axial end face (38) of the second seal member (34) is arranged outside the second slot opening (51).

9. The centrifugal separator (2) according to claim 8, wherein the second seal member (34) is retained within the second axial slot (50) by a second ring member (52), the second ring member (52) being secured in the stationary liquid passage device (14) and extending into a radial slot (54) of the second seal member (34).

10. The centrifugal separator (2) according to any one of the preceding claims, wherein the first and second sealing surfaces (30, 36) are provided in a single sealing element (58).

11. The centrifugal separator (2) according to claim 10, wherein the first liquid path (20) extends through the sealing element (58) and the second liquid path (22) extends through the sealing element (58).

12. The centrifugal separator (2) according to claim 10 or 11, wherein the sealing element (58) forms at least part of an axial end of the bowl (4) at the second axial end portion (16) of the bowl (4).

13. The centrifugal separator (2) according to any one of the preceding claims, comprising a first cooling system (60), wherein the first cooling system (60) comprises a first passage (62) extending within the first seal member (28) and being arranged for conducting cooling liquid to the first axial end face (32).

14. The centrifugal separator (2) according to claim 14, wherein the first cooling system (60) comprises a recess (66) in the first axial end face (32) extending at least partially circumferentially, and a second passage (68) extending within the first seal member (28), and wherein
the first passage (62), the recess (66), and the second passage (68) are arranged in fluid communication with each other.

15. The centrifugal separator (2) according to any one of the preceding claims, comprising a second cooling system (80), wherein the second cooling system (80) comprises an axial passage (82) extending within the second seal member (34) and being arranged to conduct cooling liquid to the second sealing surface (36), radially outside the second axial end face (38).

16. Centrifugal separator (2) according to claim 15, wherein the stationary liquid passage device (14) comprises a third cooling liquid channel (86) extending to the axial passage (82), and wherein a fourth cooling liquid channel (88) extends from the second sealing surface (36).

## Patentansprüche

1. Zentrifugalabscheider (2), umfassend eine Schüssel (4), die angeordnet ist, um eine sich entlang einer axialen Erstreckung erstreckende Drehachse (6) gedreht zu werden, eine Spindel (8), die an einem ersten axialen Endabschnitt (10) der Schüssel (4) angeordnet ist und angeordnet ist, um die Trommel (4) um die Drehachse (6) zu drehen, ein Gehäuse (12), das die Schüssel (4) mindestens teilweise zu umschließen, eine stationäre Flüssigkeitsdurchlassvorrichtung (14), die an einem zweiten axialen Endabschnitt (16) der Schüssel (4) angeordnet ist, und eine Dichtungsanordnung (18), wobei
die Dichtungsanordnung (18) eine Schnittstelle zwischen der Schüssel (4) und der stationären Flüssigkeitsdurchlassvorrichtung (14) bildet, wobei
ein erster Flüssigkeitsweg (20) sich konzentrisch zur Drehachse (6) zwischen der stationären Flüssigkeitsdurchlassvorrichtung (14) und der Schüssel (4) erstreckt, und ein zweiter Flüssigkeitsweg (22) sich radial außerhalb des ersten Flüssigkeitswegs (20) zwischen der stationären Flüssigkeitsdurchlassvorrichtung (14) und der Schüssel (4) erstreckt, wobei
die Dichtungsanordnung (18) eine erste Dichtung (24) zwischen dem ersten Flüssigkeitsweg (20) und dem zweiten Flüssigkeitsweg (22) umfasst, wobei sich die erste Dichtung (24) konzentrisch zur und um die Drehachse (6) herum erstreckt, wobei
die Dichtungsanordnung (18) eine zweite Dichtung (26) zwischen dem zweiten Flüssigkeitsweg (22) und einem radial außerhalb des zweiten Flüssigkeitswegs (22) liegenden Raum umfasst, wobei sich die zweite Dichtung (26) konzentrisch zur und um die Drehachse (6) herum erstreckt, **dadurch gekennzeichnet, dass**
die stationäre Flüssigkeitsdurchlassvorrichtung (14) lösbar mit dem Gehäuse (12) verbunden ist,
die erste Dichtung (24) ein erstes Dichtungselement (28) umfasst, das in der stationären Flüssigkeitsdurchlassvorrichtung (14) angeordnet ist, und eine erste Dichtoberfläche (30), die in der Schüssel (4) angeordnet ist, wobei das erste Dichtungselement (28) eine erste axiale Endfläche (32) aufweist, die erste axiale Endfläche (32) und die erste Dichtoberfläche (30) konfiguriert sind, um in einem Dichtungsanschlag positioniert zu sein, wobei
die zweite Dichtung (26) ein zweites Dichtungselement (34) umfasst, das in der stationären Flüssigkeitsdurchlassvorrichtung (14) angeordnet ist, und eine zweite Dichtoberfläche (36), die in der Schüssel (4) angeordnet ist, wobei das zweite Dichtungselement (34) eine zweite axiale Endfläche (38) aufweist, die zweite axiale Endfläche und die zweite Dichtoberfläche (36) konfiguriert sind, um in einem Dichtungsanschlag positioniert zu sein, wobei
das zweite Dichtungselement (34) vom ersten Dichtungselement (28) getrennt ist, und wobei
das erste und zweite Dichtungselement (28, 34) von der ersten und zweiten Dichtoberfläche (30, 36) zusammen mit einem Lösen der stationären Flüssigkeitsdurchlassvorrichtung (14) von dem Gehäuse (12) trennbar sind.

2. Zentrifugalabscheider (2) nach Anspruch 1, wobei die erste Dichtoberfläche (30) in einer ersten Ebene (33) angeordnet ist, und die zweite Dichtoberfläche (36) in einer zweiten Ebene (35) angeordnet ist, wobei sich die erste und zweite Ebene (33, 35) senkrecht zur Drehachse (6) erstrecken und wobei die erste und zweite Ebene (33, 35) in einem axialen Abstand voneinander innerhalb eines Bereichs von 0 - 25 mm angeordnet sind.

3. Zentrifugalabscheider (2) nach Anspruch 1 oder 2, wobei das erste Dichtungselement (28) durch ein oder mehrere erste elastische Elemente (37) in Richtung der ersten Dichtoberfläche (30) vorgespannt ist und das zweite Dichtungselement (34) durch ein oder mehrere zweite elastische Elemente (39) in Richtung der zweiten Dichtfläche (36) vorgespannt ist, und wobei das eine oder mehrere erste und zweite elastische Element (37, 39) außerhalb des ersten und zweiten Flüssigkeitswegs (20, 22) angeordnet sind.

4. Zentrifugalabscheider (2) nach Anspruch 3, wobei das erste Dichtungselement (28) teilweise in einem ersten axialen Schlitz (40) der stationären Flüssigkeitsdurchlassvorrichtung (14) angeordnet ist,
wobei sich der erste axiale Schlitz (40), in Bezug auf die Drehachse (6) gesehen, in Umfangsrichtung erstreckt und eine Tiefe von einer ersten Schlitzöffnung (41) entlang der axialen Erstreckung aufweist, wobei
die erste axiale Endfläche (32) des ersten Dichtungselements (28) außerhalb der ersten Schlitzöffnung (41) angeordnet ist.

5. Zentrifugalabscheider (2) nach Anspruch 4, wobei
das erste Dichtungselement (28) durch ein erstes Ringelement (42) innerhalb des ersten axialen Schlitzes (40) gehalten wird, wobei das erste Ringelement (42) in der stationären Flüssigkeitsdurchlassvorrichtung (14) befestigt ist und sich in einen radialen Schlitz (44) des ersten Dichtungselements (28) erstreckt.

6. Zentrifugalabscheider (2) nach Anspruch 5, wobei das erste Ringelement (42) in der stationären Flüssigkeitsdurchlassvorrichtung (14) zwischen einem Körper (46) der stationären Flüssigkeitsdurchlassvorrichtung (14) und einer Hülse (48) befestigt ist, und wobei die Hülse (48) abnehmbar mit dem Körper (46) der stationären Flüssigkeitsdurchlassvorrichtung verbunden ist.

7. Zentrifugalabscheider (2) nach Anspruch 6, wobei der Körper (46) der stationären Flüssigkeitsdurchlassvorrichtung (14) und die Hülse (48) einen Abschnitt des ersten Flüssigkeitswegs (20) begrenzen.

8. Zentrifugalabscheider (2) nach einem der Ansprüche 3-7, wobei das zweite Dichtungselement (34) teilweise in einem zweiten axialen Schlitz (50) der stationären Flüssigkeitsdurchlassvorrichtung (14) angeordnet ist,
wobei sich der zweite axiale Schlitz (50), in Bezug auf die Drehachse (6) gesehen, in Umfangsrichtung erstreckt und eine Tiefe von einer zweiten Schlitzöffnung (51) entlang der axialen Erstreckung aufweist, wobei
die zweite axiale Endfläche (38) des zweiten Dichtungselements (34) außerhalb der zweiten Schlitzöffnung (51) angeordnet ist.

9. Zentrifugalabscheider (2) nach Anspruch 8, wobei das zweite Dichtungselement (34) durch ein zweites Ringelement (52) innerhalb des zweiten axialen Schlitzes (50) gehalten wird, wobei das zweite Ringelement (52) in der stationären Flüssigkeitsdurchlassvorrichtung (14) befestigt ist und sich in einen radialen Schlitz (54) des zweiten Dichtungselements (34) erstreckt.

10. Zentrifugalabscheider (2) nach einem der vorstehenden Ansprüche, wobei die erste und zweite Dichtoberfläche (30, 36) in einem einzigen Dichtelement (58) bereitgestellt sind.

11. Zentrifugalabscheider (2) nach Anspruch 10, wobei sich der erste Flüssigkeitsweg (20) durch das Dichtungselement (58) hindurch erstreckt und sich der zweite Flüssigkeitsweg (22) durch das Dichtungselement (58) hindurch erstreckt.

12. Zentrifugalabscheider (2) nach Anspruch 10 oder 11, wobei das Dichtungselement (58) mindestens einen Teil eines axialen Endes der Schüssel (4) am zweiten axialen Endabschnitt (16) der Schüssel (4) bildet.

13. Zentrifugalabscheider (2) nach einem der vorstehenden Ansprüche, umfassend ein erstes Kühlsystem (60), wobei das erste Kühlsystem (60) einen ersten Durchlass (62) umfasst, der sich innerhalb des ersten Dichtungselements (28) erstreckt und angeordnet ist, um Kühlflüssigkeit zur ersten axialen Endfläche (32) zu leiten.

14. Zentrifugalabscheider (2) nach Anspruch 14, wobei das erste Kühlsystem (60) eine Aussparung (66) in der ersten axialen Endfläche (32) umfasst, die sich mindestens teilweise in Umfangsrichtung erstreckt, und einen zweiten Durchlass (68), der sich innerhalb des ersten Dichtungselements (28) erstreckt, und wobei
der erste Durchlass (62), die Aussparung (66) und der zweite Durchlass (68) in strömungstechnischer Kommunikation miteinander angeordnet sind.

15. Zentrifugalabscheider (2) nach einem der vorstehenden Ansprüche, umfassend ein zweites Kühlsystem (80), wobei das zweite Kühlsystem (80) einen axialen Durchlass (82) umfasst, der sich innerhalb des zweiten Dichtungselements (34) erstreckt und angeordnet ist, um Kühlflüssigkeit radial außerhalb der zweiten axialen Endfläche (38) zur zweiten Dichtoberfläche (36) zu leiten.

16. Zentrifugalabscheider (2) nach Anspruch 15, wobei die stationäre Flüssigkeitsdurchlassvorrichtung (14) einen dritten Kühlflüssigkeitskanal (86) umfasst, der sich zum axialen Durchlass (82) erstreckt, und wobei sich ein vierter Kühlflüssigkeitskanal (88) von der zweiten Dichtoberfläche (36) erstreckt.

## Revendications

1. Séparateur centrifuge (2) comprenant un bol (4) agencé pour être tourné autour d'un axe de rotation (6) s'étendant le long d'une extension axiale, une broche (8) agencée au niveau d'une première portion d'extrémité axiale (10) du bol (4) et agencée pour faire tourner le bol (4) autour de l'axe de rotation (6), un boîtier (12) enveloppant au moins partiellement le bol (4), un dispositif de passage de liquide stationnaire (14) agencé au niveau d'une seconde portion d'extrémité axiale (16) du bol (4), et un agencement d'étanchéité (18), dans lequel
l'agencement d'étanchéité (18) forme une interface entre le bol (4) et le dispositif de passage de liquide stationnaire (14), dans lequel
un premier chemin de liquide (20) s'étend concentriquement à l'axe de rotation (6) entre le dispositif de passage de liquide stationnaire (14) et le bol (4), et un second chemin de liquide (22) s'étend radialement à l'extérieur du premier chemin de liquide (20) entre le dispositif de passage de liquide stationnaire (14) et le bol (4), dans lequel
l'agencement d'étanchéité (18) comprend un premier joint (24) entre le premier passage de liquide (20) et le second passage de liquide (22), le premier joint (24) s'étendant concentriquement autour de l'axe de rotation (6), dans lequel
l'agencement d'étanchéité (18) comprend un second joint (26) entre le second passage de liquide (22) et un espace radialement à l'extérieur du second passage de liquide (22), le second joint (26) s'étendant concentriquement avec et autour de l'axe de rotation (6), **caractérisé en ce que**,
le dispositif de passage de liquide stationnaire (14) est connecté de manière libérable au boîtier (12),
le premier joint (24) comprend un premier organe de joint (28) agencé dans le dispositif de passage de liquide stationnaire (14) et une première surface d'étanchéité (30) agencée dans le bol (4), le premier organe de joint (28) présentant une première face d'extrémité axiale (32), la première face d'extrémité axiale (32) et la première surface d'étanchéité (30) étant configurées pour être positionnées dans une culée d'étanchéité, dans lequel
le second joint (26) comprend un second organe de joint (34) agencé dans le dispositif de passage de liquide stationnaire (14) et une seconde surface d'étanchéité (36) agencée dans le bol (4), le second organe de joint (34) présentant une seconde face d'extrémité axiale (38), la seconde face d'extrémité axiale et la seconde surface d'étanchéité (36) étant configurées pour être positionnées dans une culée d'étanchéité, dans lequel
le second organe de joint (34) est séparé du premier organe de joint (28), et dans lequel
les premier et second organes de joint (28, 34) sont séparables des première et seconde surfaces d'étanchéité (30, 36) conjointement avec une libération du dispositif de passage de liquide stationnaire (14) à partir du boîtier (12).

2. Séparateur centrifuge (2) selon la revendication 1, dans lequel la première surface d'étanchéité (30) est agencée dans un premier plan (33) et la seconde surface d'étanchéité (36) est agencée dans un second plan (35), les premier et second plans (33, 35) s'étendant perpendiculairement à l'axe de rotation (6), et dans lequel les premier et second plans (33, 35) sont agencés à une distance axiale l'un de l'autre au sein d'une plage de 0-25 mm.

3. Séparateur centrifuge (2) selon la revendication 1 ou 2, dans lequel le premier organe de joint (28) est sollicité vers la première surface d'étanchéité (30) par un ou plusieurs premiers organes élastiques (37) et le second organe de joint (34) est sollicité vers la seconde surface d'étanchéité (36) par un ou plusieurs seconds organes élastiques (39), et dans lequel l'un ou les plusieurs premier et second organes élastiques (37, 39) sont agencés à l'extérieur des premier et second chemins de liquide (20, 22).

4. Séparateur centrifuge (2) selon la revendication 3, dans lequel le premier organe de joint (28) est partiellement agencé dans une première fente axiale (40) du dispositif de passage de liquide stationnaire (14),
la première fente axiale (40), vue par rapport à l'axe de rotation (6), s'étendant circonférentiellement et présentant une profondeur à partir d'une première ouverture de fente (41) le long de l'extension axiale, dans lequel
la première face d'extrémité axiale (32) du premier organe de joint (28) est agencée à l'extérieur de la première ouverture de fente (41).

5. Séparateur centrifuge (2) selon la revendication 4, dans lequel
le premier organe de joint (28) est retenu au sein de la première fente axiale (40) par un premier organe annulaire (42), le premier organe annulaire (42) étant fixé dans le dispositif de passage de liquide stationnaire (14) et s'étendant dans une fente radiale (44) du premier organe de joint (28).

6. Séparateur centrifuge (2) selon la revendication 5, dans lequel le premier organe annulaire (42) est fixé dans le dispositif de passage de liquide stationnaire (14) entre un corps (46) du dispositif de passage de liquide stationnaire (14) et un manchon (48), et dans lequel le manchon (48) est connecté de manière amovible au corps (46) du dispositif de passage de liquide stationnaire.

7. Séparateur centrifuge (2) selon la revendication 6, dans lequel le corps (46) du dispositif de passage de liquide stationnaire (14) et le manchon (48) délimitent une portion du premier chemin de liquide (20).

8. Séparateur centrifuge (2) selon l'une quelconque des revendications 3-7, dans lequel le second organe de joint (34) est partiellement agencé dans une seconde fente axiale (50) du dispositif de passage de liquide stationnaire (14),
la seconde fente axiale (50), vue par rapport à l'axe de rotation (6), s'étendant circonférentiellement et présentant une profondeur à partir d'une seconde ouverture de fente (51) le long de l'extension axiale, dans lequel
la seconde face d'extrémité axiale (38) du second organe de joint (34) est agencée à l'extérieur de la seconde ouverture de fente (51).

9. Séparateur centrifuge (2) selon la revendication 8, dans lequel le second organe de joint (34) est retenu au sein de la seconde fente axiale (50) par un second organe annulaire (52), le second organe annulaire (52) étant fixé dans le dispositif de passage de liquide stationnaire (14) et s'étendant dans une fente radiale (54) du second organe de joint (34).

10. Séparateur centrifuge (2) selon l'une quelconque des revendications précédentes, dans lequel les première et seconde surfaces d'étanchéité (30, 36) sont fournies dans un seul élément d'étanchéité (58).

11. Séparateur centrifuge (2) selon la revendication 10, dans lequel le premier chemin de liquide (20) s'étend à travers l'élément d'étanchéité (58) et le second chemin de liquide (22) s'étend à travers l'élément d'étanchéité (58).

12. Séparateur centrifuge (2) selon la revendication 10 ou 11, dans lequel l'élément d'étanchéité (58) forme au moins une partie d'une extrémité axiale du bol (4) au niveau de la seconde portion d'extrémité axiale (16) du bol (4).

13. Séparateur centrifuge (2) selon l'une quelconque des revendications précédentes, comprenant un premier système de refroidissement (60), dans lequel le premier système de refroidissement (60) comprend un premier passage (62) s'étendant au sein du premier organe de joint (28) et étant agencé pour conduire du liquide de refroidissement vers la première face d'extrémité axiale (32).

14. Séparateur centrifuge (2) selon la revendication 14, dans lequel le premier système de refroidissement (60) comprend un évidement (66) dans la première face d'extrémité axiale (32) s'étendant au moins partiellement circonférentiellement, et un second passage (68) s'étendant au sein du premier organe de joint (28), et dans lequel
le premier passage (62), l'évidement (66) et le second passage (68) sont agencés en communication fluidique entre eux.

15. Séparateur centrifuge (2) selon l'une quelconque des revendications précédentes, comprenant un second système de refroidissement (80), dans lequel le second système de refroidissement (80) comprend un passage axial (82) s'étendant au sein du second organe de joint (34) et étant agencé pour conduire du liquide de refroidissement vers la seconde surface d'étanchéité (36), radialement à l'extérieur de la seconde face d'extrémité axiale (38).

16. Séparateur centrifuge (2) selon la revendication 15, dans lequel le dispositif de passage de liquide stationnaire (14) comprend un troisième canal de liquide de refroidissement (86) s'étendant au passage axial (82), et dans lequel un quatrième canal de liquide de refroidissement (88) s'étend à partir de la seconde surface d'étanchéité (36).
